# DEMANDE DE BREVET EUROPEEN

(11) **EP 3 035 117 A1**
(43) Date de publication de la demande: **22.06.2016**
(21) Numéro de dépôt: 14307048.0
(22) Date de dépôt: 16.12.2014
(51) Int. Cl.: G02F 1/1345, G02F 1/167, H01R 4/26, H01R 12/70

(54) **Procédé de fabrication d'un dispositif d'affichage**

(71) Demandeur: GEMALTO SA, 92190 Meudon (FR)
(72) Inventeur: La désignation de l'inventeur n'a pas encore été déposée

(57) **Abrégé**

L'invention concerne un procédé de fabrication d'un dispositif d'affichage (1A) comportant un circuit ou composant électronique / électrique ou élément de circuit (2A, 2B, 6) connecté à une couche conductrice ou électrode (4) disposée au voisinage d'une couche d'affichage (5) ;
Le procédé est caractérisé en ce qu'il comprend les étapes suivantes :
- fourniture d'un circuit électrique / électronique ou élément de circuit comprenant au moins un composant électrique (2A, 2B) de connexion présentant une forme saillante ou protusion (P) apte à s'enfoncer dans ladite couche conductrice ou électrode (4) ou la déformer par pressage,
- pressage dudit circuit électrique/électronique (2A, 2B, 6) contre ladite couche d'affichage (5) de manière à ce que la forme saillante ou protusion (P) contacte électriquement la couche conductrice ou électrode (4) notamment en s'enfonçant dedans ou la déformant.

L'invention concerne également le dispositif correspondant.

## Description

### Domaine de l'invention.

L'invention concerne un procédé de fabrication d'un dispositif d'affichage.

Le procédé comprend notamment une étape de connexion pour connecter électriquement une couche conductrice ou électrode disposée au voisinage d'une couche d'encre ou de microcapsules contenant des particules d'affichage notamment colorées.

Ces couches de microcapsules sont notamment utilisées pour des afficheurs électroniques, afficheurs plats, à plasma, afficheur sensitifs et des applications d'encre électroniques, papier électronique.

Dans son application préférentielle, l'invention concerne la connexion d'un afficheur, notamment de type électro-phorétique, à au moins un contact électrique d'un circuit.

En particulier, l'invention concerne la connexion d'une couche conductrice notamment en oxyde d'indium-étain (ITO) d'un afficheur type électro-phorétique à au moins un contact électrique d'un circuit.

L'oxyde « ITO » est un des oxydes conducteurs transparents les plus utilisés du fait de ses propriétés de conductivité électrique et de transparence optique. En outre, il peut être déposé en film fin notamment par technique d'évaporation sous vide ou pulvérisation.

Des films fins ou couches d'oxyde « ITO » sont également utilisés pour des diodes, des LED, cellules solaires, anode. Les capsules de particules, notamment d'encre, sont utilisées dans les afficheurs électroniques bistables.

L'invention concerne également des produits ou dispositifs électroniques qui utilisent un afficheur. L'afficheur peut être de type électro phorétique comme des afficheurs pour cartes à puce notamment bancaires ou autres types de cartes ayant une zone d'affichage de faible épaisseur. De tels produits électroniques avec afficheur peuvent comprendre des clés électroniques notamment USB, des cartes d'identité, des passeports, des étiquettes électroniques, des ordinateurs, des téléphones portable, des assistants personnels (PDAs).

### Art antérieur.

Dans les cartes bancaires, on assiste actuellement à l'apparition d'un code CW de type dynamique. Ce code peut varier avec le temps et est affiché notamment avec de petits afficheurs au dos d'une carte bancaire. Des afficheurs permettent aussi d'afficher des codes à usage unique de type OTP (one time password) pour effectuer des transactions sécurisée en ligne.

Les afficheurs électroniques fins existent actuellement sur le marché sont fabriqués de la manière suivante :
- Découpe d'un film d'afficheur à partir d'un film mère d'un complexe laminé (FPL) ou papier électronique fourni par feuille de 60 x 40 cm avec un revêtement de protection ;
- Découpe et retrait d'une portion de revêtement de protection du film afficheur;
- Retrait des microcapsules actives accessibles sous la portion de revêtement retirée (certaines éclatées libèrent de l'encre et polluent / souillent la couche transparente ITO);
- Nettoyage à l'alcool de la surface d'oxyde "ITO" polluée / souillée ;
- Découpe d'un matériau conducteur électrique double face (ou masse de matière électriquement conductrice) aux dimensions de la portion de revêtement enlevée ;
- Positionnement du conducteur double-face (auto-adhésive) sur la couche d'oxyde ITO avec précision ;
- Assemblage de l'ensemble obtenu sur un circuit flexible (circuit imprimé PCB) à connecter électriquement, le conducteur double-faces interconnectant la couche d'oxyde ITO avec au moins une zone de connexion du circuit imprimé.

### Problème technique.

Un nombre important d'étapes est donc nécessaire à l'assemblage de la couche FPL sur le PCB notamment d'une carte affichage flexible. Ces étapes sont en outre réalisées manuellement. En outre, il y a un risque de mauvais alignement de la couche conductrice auto-adhésive avant la stratification ou assemblage.

L'invention propose un processus plus simple pour réduire le nombre d'étapes.

L'invention propose une nouvelle façon de connecter une électrode commune (ITO) d'un film ou papier électronique (dit également FPL : Stratifié Plat Frontal) à un circuit imprimé (PCB) notamment de carte à puce.

L'invention propose un procédé simple et peu couteux de fabrication d'un dispositif à afficheur.

### Résumé de l'invention.

A cet effet, l'invention a pour objet un procédé de fabrication d'un dispositif d'affichage comportant un circuit ou composant électronique / électrique connecté à une couche conductrice ou électrode disposée au voisinage d'une couche d'affichage ; Le procédé se distingue en ce qu'il comprend les étapes suivantes :
- fourniture d'un circuit électrique / électronique ou élément de circuit comprenant au moins un composant électrique de connexion présentant une forme saillante ou protusion apte à s'enfoncer dans ladite couche conductrice ou la déformer par pressage,
- pressage du circuit électrique/ électronique ou élément de circuit contre ladite couche d'affichage de manière à ce que la forme saillante ou protusion contacte électriquement la couche conductrice ou électrode notamment en la déformant ou en s'enfonçant dedans.

Selon d'autres caractéristiques ou mode de mise en oeuvre :
- La couche d'affichage comprend des microcapsules colorées ou d'encre ou notamment un film électro chromique ;
- le composant électrique de connexion est un plot comprenant une pointe ;
- Le composant ou élément électrique de connexion comprend au moins une langue ou pointe saillante ;
- La langue saillante est issue d'une découpe d'une surface métallique conductrice électriquement ;
- La langue est réalisée par embossage ou emboutissage ;
- La connexion est réalisée au cours d'une étape de lamination d'un circuit électrique/ électronique comprenant au moins un composant électrique de connexion ;
- Au moins un composant ou élément électrique de connexion est réalisé notamment par soudure / brasure sur ledit circuit électrique/ électronique ou par l'intermédiaire d'une colle conductrice.

L'invention a également pour objet un dispositif d'affichage correspondant ou obtenu par le procédé ci-dessus.

### Brève description des figures.

- La figure 1 illustre une étape de fabrication d'un dispositif conforme à un mode de mise en oeuvre de l'invention ;
- La figure 2 illustre une étape de fabrication d'un dispositif conforme à un second mode de mise en oeuvre de l'invention;
- La figures 3 illustre une vue de gauche de la figure 2 après connexion ;
- La figure 4 illustre le dispositif de la figure 1 obtenu après assemblage par pressage et connexion ;
- La figure 5 illustre un dispositif d'affichage de la figure précédente vue de dessus ;
- Les figures 6, 7 et 8 illustrent des variantes d'éléments de connexion;
- La figure 9 illustre un dispositif conforme à l'invention comportant un élément de connexion sensiblement conforme à celui de la figure 6.
- La figure 10 illustre un dispositif sensiblement identique à celui de la figure précédente mais avec de l'encre électro chromique.

### Description.

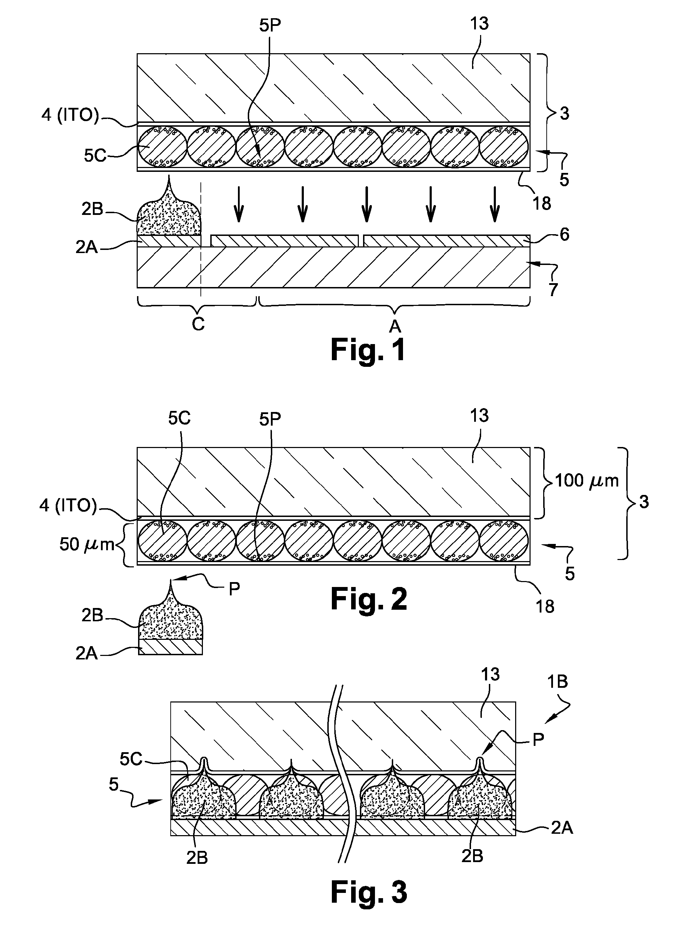

Les figures 1 et 2 illustrent une étape d'un procédé de fabrication d'un dispositif d'affichage électronique 1A, 1B, 1C /électrique conforme à un premier mode de mise en oeuvre de l'invention. Le dispositif comporte un circuit ou composant électronique / électrique ou élément de circuit 2A, 2B, 6 connecté à une couche conductrice ou électrode 4 disposée au voisinage d'une couche d'affichage 5.

A la figure 1, la couche d'affichage 5 comprend une couche de microcapsules 5C d'encre 5P prise en sandwich entre une couche ITO 4 ou électrode et un film adhésif 18. La couche ITO est fixée à (ou supportée par) un substrat polymère transparent 13. Ici la couche conductrice ITO est directement au contact des microcapsules mais elle pourrait être séparée d'une ou plusieurs couches notamment d'isolant ou de conducteur. La couche conductrice peut donc être légèrement distante de la couche d'affichage.

L'ensemble comprenant le polymère transparent 3, la couche ITO 4, la couche de microcapsules 3 et une couche ou film d'adhésif 18, forme un complexe d'affichage 3.

Le complexe 3 est généralement fourni tel qu'illustré, mais en plaque de grandes dimensions pouvant servir à la fabrication de plusieurs afficheurs. Des plaques de couche d'affichage de grandes dimensions, par exemple 60 x 40 cm, peuvent être préparées avec au moins un élément d"interconnexion (2B, 2A) (voire de préférence plusieurs) et vendues préparées avec plusieurs sites (ou zones) de connexion électrique localisés à des endroits prédéfinis.

Par ailleurs, un élément de circuit électrique 2B ou de connexion est réalisé sur un substrat commun de commande d'affichage 6 et 7.

Alternativement aux figures 2, 3, dans une version élémentaire de l'invention, l'élément de connexion 2B est réalisé seul sur un substrat conducteur électrique d'interconnexion 2A avant d'être complété par d'un circuit de commande 6 complémentaire qui sera amené ou reporté ultérieurement.

A la figure 3, est illustré l'assemblage et connexion électrique de l'élément de connexion 2A, 2B avec un complexe 3 comprenant une couche d'affichage, par simple pression ou pénétration de l'élément de connexion 2B, 2A dans la couche d'affichage, en traversant la couche d'adhésif 18, puis la couche de microcapsules 5 et en contactant et/ou perforant et/ou déformant la couche ITO 4.

Ainsi, on peut disposer d'une couche d'affichage 3 prête à l'emploi (avec au moins un élément d'interconnexion 2A, 2B connecté) qui peut avantageusement s'accommoder de (ou recevoir) toute autre connexion électrique connue de l'homme de l'art (soudage, collage conducteur, thermo compression...).

Plus précisément, dans l'exemple, le complexe 5 comprend un film transparent support 13, notamment en PET, avec une couche conductrice 4 d'oxyde d'indium-étain ITO au contact du film support 13, une couche de microcapsules 5C comportant des particules d'affichage 5P au contact de la couche (ITO) 4, un film de maintien des capsules et une couche d'adhésif sur le film de maintien de la couche de capsules. Le film de maintien peut être sur un film adhésif.

La couche d'affichage peut comprendre des microcapsules colorées ou d'encre ou de l'encre notamment de type électro-chromique.

Ces particules d'affichage ici sont chargées électriquement et se déplacent dans les microcapsules en fonction de la tension qui est appliquée d'une part sur la couche conductrice 4 et d'autre part sur la couche conductrice 6 en regard du circuit imprimé flexible F.

Le dispositif est ici un afficheur de type électro-phorétique (ePaper), pour carte à puce notamment bancaire. Alternativement, L'afficheur peut être pour des produits électroniques tels que des clés électroniques notamment USB, des cartes d'identité, des passeports, des étiquettes électroniques, des ordinateurs, des téléphones portable, des assistants personnels (PDAs).

Le dispositif peut être un sous-ensemble électrique et/ou électronique destiné à fabriquer un des dispositifs susvisés comprenant au moins une zone d'affichage et une zone préparée de connexion fixée sur l'afficheur comprenant au moins un ou plusieurs plots d'interconnexion.

Le dispositif peut être un module ou insert prêt à l'emploi ou être encarté ou inséré / connecté dans un autre corps ou support. Il peut comprendre au moins la zone d'affichage, un ou plusieurs composant(s) de connexion ou d'interconnexion et un circuit imprimé avec des composants de circuit intégré notamment de pilotage de la couche d'affichage. Le circuit 2A peut être réduit à un élément d'interconnexion à un ou plusieurs points de connexion 2B supporté(s) par une plaque conductrice ou film conducteur.

Selon une caractéristique de ce mode de mise en oeuvre, le procédé comprend une étape de fourniture d'un circuit 2A électrique / électronique ou élément de circuit 2A, 2B comprenant au moins un composant ou élément électrique élémentaire 2B de connexion présentant une forme saillante ou protusion (la figure 2 est une variante élémentaire destinée à recevoir une connexion ultérieure notamment d'un circuit imprimé flexible similaire aux circuits 6 ou autre connexion indépendante de polarité).

Ce composant ou élément électrique de connexion 2B est apte de part sa forme saillante à s'enfoncer dans ladite couche conductrice 4, (ITO) ou la déformer par pressage. Ce composant ou élément électrique de connexion peut être ou comprendre un plot terminé 2B ou non par une pointe, une pointe, une langue saillante, un bossage, une particule, toute protusion permettant une connexion électrique avec une couche distante d'au moins une couche de particules d'affichage.

Le composant électrique de connexion peut comprendre au moins une langue ou pointe saillante orientée en direction de la couche ou électrode conductrice 4 à connecter.

L'élément de connexion a de préférence une hauteur supérieure à l'épaisseur de la couche des particules d'affichage. Ici par exemple, la couche d'affichage à une épaisseur d'environ 50 µm. Le plot 2B à une hauteur d'environ 80 µm et repose sur un substrat métallique conducteur 2A.

Le composant ou élément de connexion 2B est formé ici par un bossage réalisé par technique soudage de fil électrique (wire ou Ball bonding) bien connu dans l'industrie de la carte à puce mais moins dans celui des afficheurs. Il s'agit d'une technique de connexion classique par fil électrique, généralement utilisée avec une machine automatique pour connecter un plot de puce de circuit intégré du type puce de carte à puce standard.

Le fil est soudé puis étiré d'une certaine longueur avant d'être coupé pour obtenir un plot pointu (communément appelé « stud bump » en langage anglo-saxon.

Un plot (ou plusieurs) est de préférence fixé à une surface conductrice support 2A avant d'être reporté contre la couche conductrice à connecter.

Cette surface conductrice est de préférence un circuit imprimé fin et/ou flexible qui peut avoir une surface égale à celle de la couche conductrice ou électrode à connecter. Alternativement, au moins un composant électrique de connexion est réalisé notamment par soudure / brasure sur ledit circuit électrique/ électronique ou par l'intermédiaire d'une colle conductrice.

Le circuit imprimé 6 peut contenir de préférence le circuit de pilotage de la couche d'affichage ou contenir au moins des pistes ou zones conductrices 6 de pilotage destinées à présenter une polarité électrique pour influer sur la couche d'affichage.

Les zones conductrices de circuit électrique 6 sont ici supportées par un substrat isolant 7 et/ou comprenant des pistes d'amenées de courant et/ou des vias conducteurs.

Ensuite, le procédé comprend une étape de pressage du circuit électrique contre la couche de microcapsules 5.
Cette opération peut être de préférence effectuée par une opération de pressage à chaud ou de lamination classique. Au minimum, l'invention prévoit de fixer /coller une pièce notamment en forme de punaise ou similaire ou avec un rangée de pointes à travers les microcapsules pour connecter la couche conductrice ITO distante.

Le pressage est effectué de manière que la forme saillante ou protusion des plots ou éléments de connexion permette un enfoncement dans la couche conductrice ou une déformation de cette dernière.

Ainsi en une seule opération de pressage, le procédé effectue l'assemblage et connexion du circuit de commande de l'afficheur ou du moins d'un élément d'interconnexion 2A, 2B.

Dans l'exemple, on a préféré effectuer la connexion au cours d'une étape de lamination du circuit électrique/ électronique comprenant au moins un composant électrique de connexion avec la couche d'affichage comprenant la couche conductrice ou électrode 4.

Grâce à l'invention, il n'est pas nécessaire de retirer les capsules dans la zone de connexion du circuit imprimé à la couche conductrice ou électrode 4. Cette zone de connexion même légèrement souillée par percement de quelques capsules 5C (ou une capsule dans le cas où il un seul plot de connexion) n'est pas gênante pour l'affichage car la zone de connexion C se trouve située latéralement en dehors de la zone d'affichage A.

Selon une caractéristique de ce mode de mise en oeuvre, au moins un composant ou élément électrique de connexion est réalisé dans une zone C située en dehors d'une zone d'affichage. On distingue, une zone de connexion C en marge de l'afficheur sur un bord de la couche d'affichage A. Cette zone C peut comprendre par exemple une dizaine de plots de connexion 2B disposés en rangée le long d'un bord de l'afficheur pour améliorer la conduction électrique et faciliter la connexion. On distingue également une zone A adjacente à cette zone C et destinée à l'affichage proprement dit ou du moins à être polarisé pour commander un basculement ou orientation des particules dans les microcapsules ou orientation d'une encre électro-chromique comme décrit ci-après.

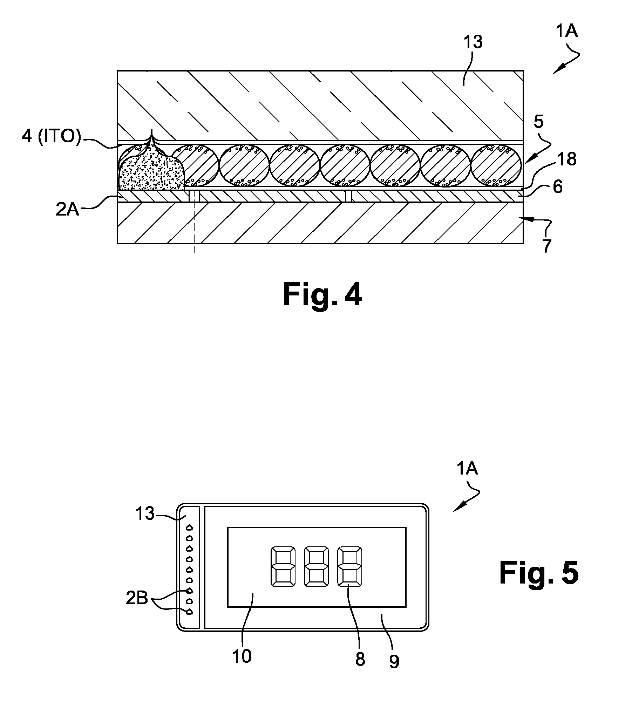

Aux figures 3 et 4, l'assemblage et connexion des éléments de connexion électrique 2B avec la couche conductrice 4 sont effectués et on obtient soit le dispositif d'affichage 1A soit un dispositif intermédiaire d'affichage 1B. La figure 3 illustre l'assemblage en vue de gauche de la structure de la figure 2. Le plot 2B peut être seul ou faire partie d'une rangée de plots comme sur la figure 3 pour assurer une meilleure conduction par une pluralité de connexions électriques.

La couche de microcapsules est emprisonnée entre la couche conductrice 4 et la couche conductrice métallique 6 du circuit d'affichage ou l'élément de connexion électrique 2A, 2B).

Le plot saillant pénètre dans la couche conductrice 4. Alternativement, il peut s'enfoncer ou s'imbriquer en déformant la couche en la perforant ou non. Ici dans l'exemple, certains plots contactent électriquement en perforant cette couche 4 tandis que d'autres la déforment.

Le cas échéant, l'élément de connexion ou plot 2B peut comprendre en surface supérieure au contact de la couche 4 une goutte de colle conductrice anisotropique ou non destinée à augmenter les points de connexion électrique.

La goutte de colle conductrice peut avoir été placée sur le plot ou sur la couche d'affichage dans la zone de connexion.

A la figure 5, le dispositif d'affichage assemblé 1A est visible en vue de dessus. Les plots 2B apparaissent à travers le film transparent 13. L'afficheur polarisé présente ici des numéros 8 à travers le film transparent 13.
Le dispositif comporte ici une zone non active ou non connectée 9 autour d'une surface d'affichage 10.

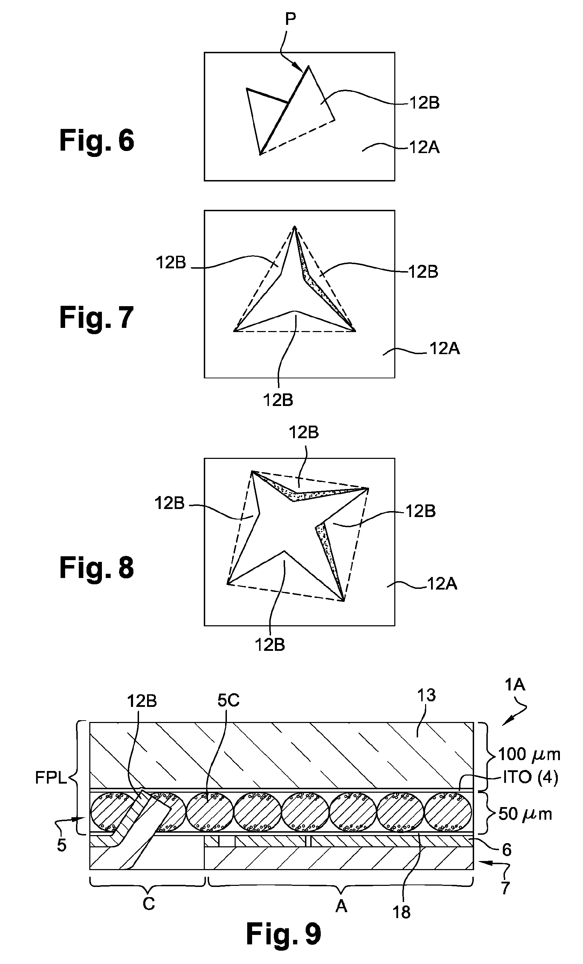

A la figure 6, l'élément de protusion en forme de langue saillante 12B peut être formé par découpe d'une surface métallique conductrice électriquement 12A de préférence en forme de triangle. Aux figures 7 et 8, l'élément de connexion comprend plusieurs langues 12B. En particulier, il en comprend respectivement trois ou quatre en forme de triangle.

La langue est peut être réalisée par embossage, emboutissage ou équivalent, par outil de découpe, poinçonnage, perforation...

A la figure 9, les références identiques avec les figures précédentes représentent les mêmes sous-ensembles ou sensiblement les mêmes. Le dispositif d'affichage est assemblé et présente une structure identique à celle de la figure 4, à la différence que le plot 2A est une langue sensiblement du même type que celle de la figure 6.
La langue peut être découpée ou poinçonnée ou formée par embossage avant ou après assemblage de la couche 6 (de préférence supportée par la couche ou film isolant 7).

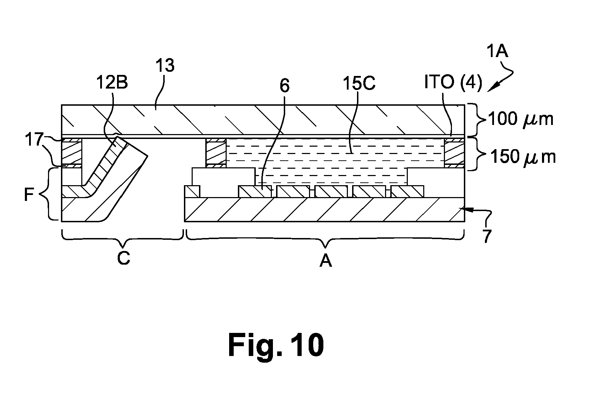

A la figure 10, les références identiques avec les figures précédentes représentent les mêmes sous-ensembles ou sensiblement les mêmes. Le dispositif d'affichage est identique à celui de la figure 9 à la différence que l'encre 15C est de l'encre électro-chromique. La zone C est vide d'encre et délimitée par des parois étanches collées par un adhésif 17. Les dimensions des épaisseurs sur les dessins sont données à titre d'exemple indicatif.

D'une manière générale, les dispositifs d'affichage 1A peuvent être formés sur des plaques de film support isolant 7 que l'on découpe par la suite au format. Le film support 7 peut comporter une couche conductrice métallique 6 contrecollée et/ou laminée sur le film support et gravée le cas échéant pour former des pistes de commandes de l'afficheur (ou le PCB : circuit imprimé) et/ou pour recevoir des composants électroniques.

Après formation des plots, sur un PCB, une partie complémentaire de l'afficheur comprenant 3, 5 14, peut être reportée notamment par lamination ou pressage à chaud.

Grâce à l'invention, le dispositif électronique /électrique obtenu présente un élément de connexion dont la forme saillante s'enfonce ou contacte dans la couche conductrice à travers la couche de microcapsules ou perpendiculairement à la couche d'affichage 5, 15C.
Le circuit électrique / électronique 6 réalise le pilotage de la couche d'affichage 5, 15C.

## Revendications

1. Procédé de fabrication d'un dispositif d'affichage (1A) comportant un circuit ou composant électronique / électrique ou élément de circuit (2A, 2B, 6) connecté à une couche conductrice ou électrode (4) disposée au voisinage d'une couche d'affichage (5),
**caractérisé en ce qu'**il comprend les étapes suivantes :
- fourniture d'un circuit électrique / électronique ou élément de circuit comprenant au moins un composant électrique (2A, 2B) de connexion présentant une forme saillante ou protusion (P) apte à s'enfoncer dans ladite couche conductrice ou électrode (4) ou la déformer par pressage,
- pressage dudit circuit électrique/électronique (2A, 2B, 6) contre ladite couche d'affichage (5) de manière à ce que la forme saillante ou protusion (P) contacte électriquement la couche conductrice ou électrode (4) notamment en s'enfonçant dedans ou la déformant.

2. Procédé selon la revendication précédente, **caractérisé en ce que** la couche d'affichage (5) comprend des microcapsules (5C) colorées ou un film électro chromique (15C).

3. Procédé selon l'une des revendications précédentes, **caractérisé en ce que** le composant électrique de connexion est un plot (2B) comprenant une pointe (P).

4. Procédé selon une des revendications 1 à 2, **caractérisé en ce que** le composant électrique de connexion comprend au moins une langue (12B) ou pointe (2B) saillante (P).

5. Procédé selon la revendication précédente, **caractérisé en ce que** ladite langue saillante est issue d'une découpe d'une surface métallique conductrice électriquement (12A).

6. Procédé selon l'une des revendications 4 à 6, **caractérisé en ce que** la langue (12B) ou découpe est réalisée par embossage ou emboutissage.

7. Procédé selon l'une des revendications précédentes, **caractérisé en ce que** la connexion est réalisée au cours d'une étape de lamination d'un circuit électrique/électronique (2A, 2B, 6) comprenant au moins un composant électrique de connexion (2B).

8. Procédé selon la revendication 1 à 3, **caractérisé en ce qu'**au moins un composant ou élément électrique (2B, 12B) de connexion est réalisé notamment par soudure / brasure ou découpe sur ledit circuit électrique/ électronique (2A) ou par l'intermédiaire d'une colle conductrice.

9. Procédé selon la revendication l'une des revendications précédentes, **caractérisé en ce que** ledit au moins un composant ou élément électrique de connexion est réalisé dans une zone (C) située en dehors d'une zone d'affichage (A).

10. Dispositif électronique (1A, 1B) /électrique comportant un circuit ou composant électronique / électrique (2A, 2B, 6) connecté à un complexe de couches (4, 5), ledit complexe comprenant une couche conductrice ou électrode (4) disposée au voisinage d'une couche d'affichage,
**caractérisé en ce qu'**il comprend un circuit électrique / électronique (2A, 2B, 6) comprenant au moins un composant ou élément de circuit électrique de connexion (2B, 12B) présentant une forme saillante ou une protusion (P) contactant électriquement la couche conductrice ou électrode (4) notamment en s'enfonçant dedans ou en la déformant.

11. Dispositif électronique (1A, 1B) /électrique selon la revendication 10, **caractérisé en ce que** la forme saillante (P) s'enfonce dans la couche conductrice (4) à travers la couche (5) ou perpendiculairement à la couche d'affichage.

12. Dispositif électronique (1A, 1B) /électrique selon la revendication 11, **caractérisé en ce que** ledit circuit électrique / électronique (6) réalise le pilotage de la couche d'affichage (5).
